# FASCICULE DE BREVET EUROPEEN

(11) **EP 1 793 168 B1**
(45) Date de publication et mention de la délivrance du brevet: **30.03.2011**
(21) Numéro de dépôt: 06077142.5
(22) Date de dépôt: 30.11.2006
(51) Int. Cl.: F23R 3/14

(54) **Dispositif d'injection d'un mélange d'air et de carburant, chambre de combustion et turbomachine munies d'un tel dispositif**
Einspritzvorrichtung für eine Mischung von Luft und Kraftstoff, Turbomaschine und Brennkammer mit einer derartigen Vorrichtung
Device for the injection of mixture of fuel and air, turbomachine and combustor with such a device

(30) Priorité: 05.12.2005 FR 0512293
(43) Date de publication de la demande: 06.06.2007
(73) Titulaire: SNECMA, 75015 Paris (FR)
(72) Inventeur: Commaret, Patrice André, 77370 Nangis (FR); Trahot, Denis, 95220 Herblay (FR); Sandelis, Denis Jean Maurice, 77950 Rubelles (FR)
(74) Mandataire: Bloch & Bonnétat

(56) Documents cités:
- EP-A- 1 096 206
- EP-A- 1 258 681
- FR-A- 2 753 779
- US-A- 4 870 818
- US-A- 5 894 732
- US-A1- 2003 131 600

## Description

L'invention se rapporte au domaine des turbomachines et concerne un dispositif d'injection d'un mélange d'air et de carburant dans une chambre de combustion d'une turbomachine.

Elle concerne plus précisément un nouveau type d'assemblage d'un dispositif d'injection aérodynamique.

Dans la suite de la description, les termes "amont" ou "aval" seront utilisés pour désigner les positions des éléments de structure les uns par rapport aux autres en direction axiale, en prenant pour référence le sens d'écoulement des gaz. De même, les termes "interne" ou "radialement interne" et "externe" ou "radialement externe" seront utilisés pour désigner les positions des éléments de structure les uns par rapport aux autres en direction radiale, en prenant pour référence l'axe de rotation de la turbomachine.

Une turbomachine comprend un ou plusieurs compresseur(s) délivrant de l'air sous pression à une chambre de combustion où l'air est mélangé à du carburant et allumé afin de générer des gaz de combustion chauds. Ces gaz s'écoulent vers l'aval de la chambre vers une ou plusieurs turbine(s) qui transforme(nt) l'énergie ainsi reçue afin d'entraîner en rotation le ou les compresseur(s) et fournir le travail nécessaire, par exemple, à la motorisation d'un avion.

Typiquement, les chambres de combustion utilisées en aéronautique comprennent une paroi interne et une paroi externe, reliées entre elles à leur extrémité amont par un fond de chambre. Le fond de chambre présente, espacées circonférentiellement, une pluralité d'ouvertures recevant chacune un dispositif d'injection qui permet l'amenée du mélange d'air et de carburant dans la chambre. Chaque dispositif d'injection comprend notamment un injecteur de carburant, des vrilles radiales, un venturi, un bol et un déflecteur, reliés entre eux, le fond de chambre venant se fixer sur le déflecteur.

Il existe plusieurs types de chambre de combustion les chambres dites "simples têtes", encore appelées "conventionnelles", c'est à dire avec une seule rangée circonférentielle de dispositifs d'injection, et les chambres dites "multi-têtes", c'est à dire avec plusieurs rangées circonférentielles de dispositifs d'injection. Parmi les chambres simples têtes, on distingue les chambres dites "à hauteur de zone primaire réduite", par opposition aux chambres simples têtes classiques. La hauteur de zone primaire correspond à la distance entre la paroi interne et la paroi externe de la chambre, mesurée immédiatement en aval de l'extrémité aval d'un bol.

Dans le cas d'une chambre simple tête classique, comme illustré dans le brevet FR 2 753 779, la surface de contact entre le bol et le déflecteur forme globalement un cylindre dont le diamètre est supérieur au diamètre extérieur des vrilles.

Par la suite, comme illustré à la figure 1, la référence D1 désignera le diamètre du cylindre correspondant à la surface de contact entre le bol et le déflecteur, et la référence D2 désignera le diamètre extérieur des vrilles.

Dans le cas d'une chambre multi-tête ou d'une chambre simple tête à hauteur de zone primaire réduite, l'espace disponible pour l'intégration des dispositifs d'injection est plus faible que pour une chambre simple tête classique. Le diamètre D1 est donc limité. Or, il peut être nécessaire, pour certaines turbomachines, d'utiliser des bols dits "à grande perméabilité", par opposition aux bols dits "conventionnels". La perméabilité est la capacité pour un dispositif d'injection, à injecter un certain débit d'air à l'intérieur du bol de façon à créer le mélange d'air et de carburant voulu. Les bols à grande perméabilité sont munis de vrilles dont la section d'entrée est plus importante que pour des bols conventionnels. Ceci entraîne un encombrement axial des vrilles plus important, et se répercute aussi sur l'encombrement radial du dispositif d'injection qui, lui aussi, est plus important que pour des bols conventionnels. L'emploi de bols à grande perméabilité impose de plus de conserver une alimentation suffisante en air sous pression au niveau des trous d'introduction d'air réalisés sur le bol, en aval des vrilles radiales. Pour une chambre multi-tête ou une chambre simple tête à hauteur de zone primaire réduite, le diamètre D1 étant limité, le diamètre extérieur des vrilles radiales D2 devient alors supérieur à D1 ce qui rend impossible l'alimentation des trous d'introduction d'air.

L'invention permet de résoudre ce problème en proposant un dispositif d'injection comportant un bol à grande perméabilité, intégrable sur des chambres multi-tête ou simple tête à hauteur de zone primaire réduite, ce dispositif d'injection assurant toujours les mêmes fonctionnalités qu'un dispositif d'injection muni d'un bol conventionnel, à savoir qu'il délivre un mélange d'air et de carburant ayant les mêmes caractéristiques. L'invention permet de plus d'obtenir un dispositif d'injection ayant un encombrement réduit par rapport aux dispositifs classiques, ce qui entraîne une diminution de la masse, toujours recherchée en aéronautique.

Le but de l'invention est donc de parvenir à créer une section d'alimentation suffisante pour les trous d'introduction d'air, grâce à un nouveau dispositif d'injection permettant d'avoir un diamètre de vrilles plus important que le diamètre correspondant à la surface de contact entre le déflecteur et le bol.

Plus particulièrement, l'invention concerne un dispositif d'injection d'un mélange d'air et de carburant dans une chambre de combustion d'une turbomachine, le dispositif d'injection ayant une symétrie de révolution autour d'un axe et comportant, disposés d'amont en aval dans le sens d'écoulement des gaz, des vrilles radiales de diamètre extérieur D2, un bol espacé axialement des vrilles radiales, un anneau de support du dispositif d'injection disposé autour du bol, le bol comportant une paroi cylindrique prolongée par une paroi évasée, la paroi évasée étant munie de trous d'introduction d'air, dispositif d'injection dans lequel l'anneau de support comporte, disposées d'amont en aval dans le sens d'écoulement des gaz, une première partie cylindrique de diamètre extérieur D3, reliée à une seconde partie cylindrique de diamètre extérieur D4 espacée axialement de la première partie cylindrique, la première partie cylindrique étant reliée à la paroi cylindrique du bol par une pluralité de pattes de support.

Avantageusement, le diamètre D3 est inférieur au diamètre D2.

Selon un exemple de réalisation, les pattes de support sont réparties circonférentiellement et régulièrement autour du bol. De plus, les trous d'introductions d'air consécutifs étant reliés par une paroi résiduelle, les pattes de support peuvent, de façon avantageuse, être disposés en face de la paroi résiduelle.

Selon la direction circonférentielle, les pattes de support peuvent avoir une épaisseur inférieure à l'épaisseur de la paroi résiduelle existant entre deux trous d'introduction consécutifs.

Selon un mode de réalisation possible, le diamètre D3 est inférieur au diamètre D4.

Avantageusement, la seconde partie cylindrique de l'anneau de support est munie d'une protubérance radiale annulaire dirigée vers l'axe de la partie cylindrique. Cette protubérance radiale peut être munie de trous de refroidissement

Par ailleurs, l'invention concerne aussi une chambre de combustion comprenant une paroi interne, une paroi externe, un fond de chambre et munie d'au moins un tel dispositif d'injection.

L'invention concerne enfin une turbomachine munie d'une telle chambre de combustion.

L'invention sera mieux comprise et d'autres avantages de celle-ci apparaîtront plus clairement à la lumière de la description d'un mode préféré de réalisation, donnée à titre d'exemple non limitatif et faite en référence aux dessins annexés, dans lesquels :
- la figure 1 est une vue schématique en coupe d'un dispositif d'injection selon l'art antérieur ;
- la figure 2 est une vue schématique en coupe d'une turbomachine et plus précisément d'un turboréacteur d'avion ;
- la figure 3 est une vue schématique en coupe d'un exemple de réalisation d'un dispositif d'injection selon l'invention ;
- la figure 4 est une vue schématique en coupe d'un autre exemple de réalisation d'un dispositif d'injection selon l'invention ;
- la figure 5 est une vue de côté partielle d'une partie d'un dispositif selon l'invention, vu l'amont.

Les mêmes références seront conservées, tout au long de la description, pour désigner des pièces ou détails similaires d'une figure à l'autre.

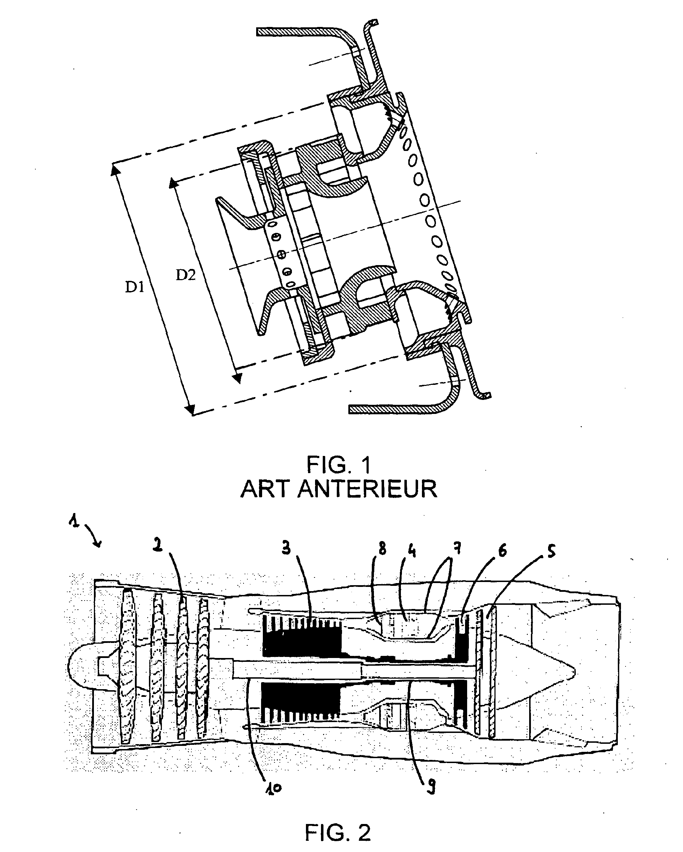

La figure 1 a été décrite plus haut et montre une vue en coupe d'un dispositif d'injection selon l'art antérieur.

La figure 2 montre en coupe une vue d'ensemble d'une turbomachine 1, par exemple un turboréacteur d'avion, comprenant un compresseur basse pression 2, un compresseur haute pression 3, une chambre de combustion 4, une turbine basse pression 5 et une turbine haute pression 6. La chambre de combustion 4 peut être du type annulaire et est délimitée par deux parois annulaires 7 espacées radialement par rapport à l'axe X de rotation du turboréacteur, et reliées à leur extrémité amont à un fond de chambre annulaire 8. Le fond de chambre 8 comporte une pluralité d'ouvertures (non représentées), régulièrement espacées circonférentiellement. Dans chacune de ces ouvertures est monté un dispositif d'injection. Les gaz de combustion s'écoulent vers l'aval dans la chambre de combustion 4 et alimentent ensuite les turbines 5 et 6 qui entraînent respectivement les compresseurs 2 et 3 disposés en amont du fond de chambre 8, par l'intermédiaire respectivement de deux arbres 9 et 10. Le compresseur haute pression 3 alimente en air les dispositifs d'injection, ainsi que deux espaces annulaires disposés radialement respectivement à l'intérieur et à l'extérieur de la chambre de combustion 4. L'air introduit dans la chambre de combustion 4 participe à la vaporisation du carburant et à sa combustion. L'air circulant à l'extérieur des parois de la chambre de combustion 2 participe au refroidissement de ces parois et pénètre dans la chambre par des trous de dilution (non représentés) afin de refroidir les gaz de combustion transmis à la turbine.

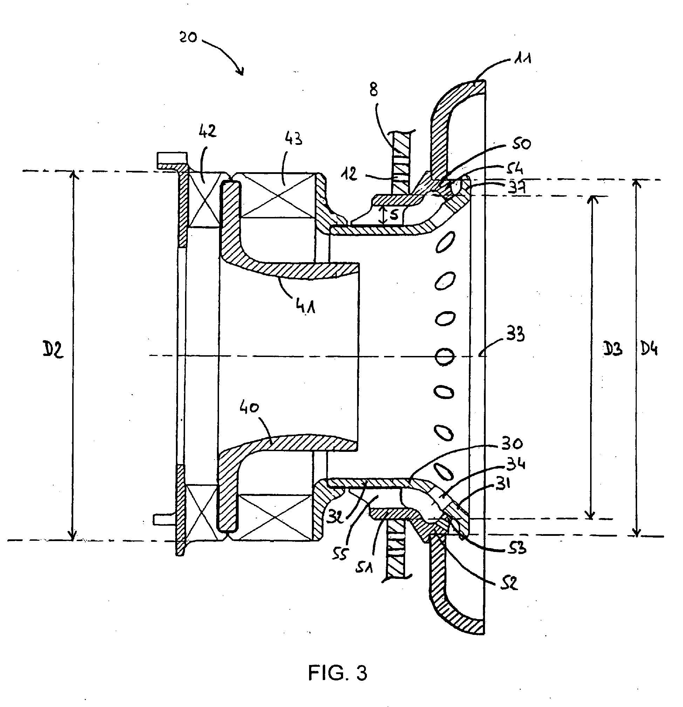

La figure 3 montre en coupe un exemple de réalisation d'un dispositif d'injection 20 selon l'invention. Le dispositif d'injection 20 comprend notamment un bol 30, un venturi 40, deux vrilles radiales 42 et 43, un déflecteur 11, ainsi qu'un anneau de support 50 du dispositif d'injection 20 dans le fond de chambre 8. Le déflecteur 11 est disposé dans la chambre de combustion parallèlement au fond de chambre 8 et est refroidi par impact avec de l'air passant par des orifices 12 traversant le fond de chambre 8. Le bol 30 est monté à l'intérieur du déflecteur 11 par l'intermédiaire de l'anneau de support 50. Le bol 30 comporte une paroi 31 évasée vers l'aval dans le prolongement d'une paroi cylindrique 32 disposée coaxialement à l'axe 33. La paroi évasée 31 comporte une pluralité de trous 34 d'introduction d'air, alimentés par de l'air provenant du compresseur haute pression 3 via la section annulaire S, ainsi qu'une collerette annulaire 37. La collerette 37, ici solidaire de la paroi évasée 31, pourrait être indifféremment aménagée sur l'anneau de support 50. La paroi cylindrique 32 entoure le venturi 40 d'axe 33 dont le contour interne 41 est de forme convergente divergente. Le venturi 40 délimite les écoulements d'air issus de la vrille primaire 42 et de la vrille secondaire 43. L'ensemble formé par les vrilles primaire et secondaire présente un diamètre extérieur D2.

L'anneau de support 50 est composé d'une première partie cylindrique amont 51, d'axe 33 et de diamètre extérieur D3, et d'une seconde partie cylindrique aval 52, coaxiale à la partie cylindrique amont 51, de diamètre extérieur D4, avec D4 supérieur à D3. Les parties cylindriques amont 51 et aval 52 sont reliées entre elles par une paroi intermédiaire conique de manière à rattraper l'écart entre les diamètres des parties cylindriques 51 et 52.

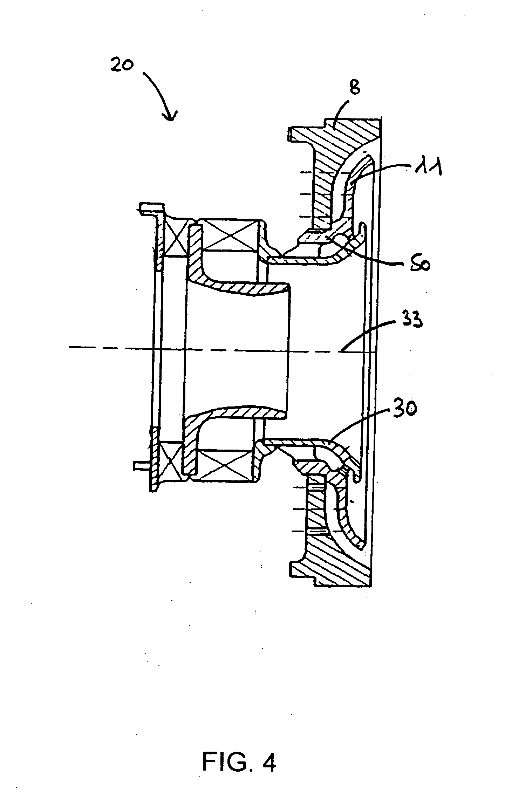

La partie cylindrique aval 52 est munie, à son extrémité aval, d'une protubérance radiale annulaire 53 dirigée vers l'axe 33. La protubérance radiale 53 vient en contact avec la paroi évasée 31 du bol de telle sorte que la surface de contact soit disposée en aval des trous d'introduction d'air 34. Cette protubérance est munie de trous de refroidissement 54, dont le rôle est d'apporter de l'air issu du compresseur haute pression 3 afin de refroidir la collerette 37. Le déflecteur 11 est monté sur l'anneau de support 50, au niveau de la partie cylindrique aval 52, la surface de contact entre le déflecteur 11 et l'anneau de support 50 étant globalement un cylindre d'axe 33 et de diamètre D4. Dans l'exemple décrit ici, le déflecteur 11 et l'anneau de support 50 sont deux pièces distinctes, mais ils pourraient indifféremment ne former qu'une seule et même pièce, comme illustré à la figure 4.

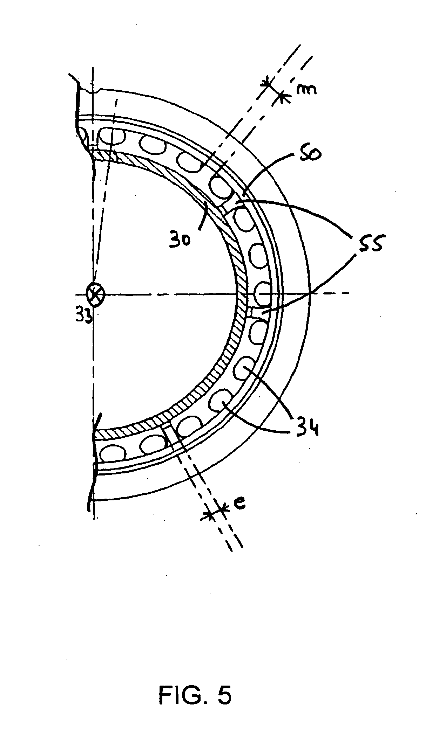

La partie cylindrique amont 51 de l'anneau de support 50 est reliée à la paroi cylindrique 32 du bol 30 par une pluralité de pattes de support 55, réparties circonférentiellement de façon régulière. Les pattes de support 55 peuvent par exemple être au nombre de 5 à 8. Comme illustré à la figure 5, chaque patte est située dans l'entraxe de deux trous d'introduction d'air 34 consécutifs, en face de la matière résiduelle existant entre ces deux trous, de façon à ne pas obturer de trou 34, même partiellement. Leur épaisseur selon la direction circonférentielle e est inférieure à l'épaisseur de matière résiduelle m existant entre deux trous d'introduction 34 consécutifs. Un moyen d'indexage angulaire de l'anneau de support 50 par rapport aux trous d'introduction 34 peut être prévu, par exemple grâce à des gorges usinées sur la surface extérieure de la paroi cylindrique 32 du bol 30. Les pattes de support 55, lors du montage, viendraient alors se loger dans ces gorges, interdisant ainsi de monter l'anneau de support 50 avec une ou plusieurs de ses pattes de support 55 tombant en face d'un ou plusieurs trous d'introduction 34.

Les pattes de support 55 permettent de ménager une section de passage annulaire S entre l'anneau de support 50 et la paroi cylindrique 32 du bol 30. Elles peuvent être brasées au bol 30.

Le fond de chambre 8 est monté sur la partie cylindrique amont 51 de l'anneau de support 50. La surface de contact entre ces deux pièces est globalement un cylindre d'axe 33 et de diamètre D3. Ce diamètre D3 correspond au diamètre D1 mentionné précédemment. On voit bien que, grâce à l'invention, une section S de passage de l'air entre l'anneau de support 50 et le bol 30 peut être aménagée, tout en ayant un diamètre D3 inférieur au diamètre extérieur D2 des vrilles 42 et 43. Ainsi, l'alimentation en air des trous d'introduction 34 et des trous de refroidissement 54 est assurée. De plus, l'encombrement radial du dispositif d'injection 20 est réduit, puisque le montage du dispositif d'injection 20 sur le fond de chambre 8 s'effectue sur un diamètre D3 plus petit. Par exemple, pour un dispositif d'injection selon l'art antérieur donnant une valeur de D1 de l'ordre de 55 à 60 mm, un dispositif d'injection selon l'invention permet d'obtenir une valeur de D3 de l'ordre de 40 à 50 mm, soit un gain de 10 à 15 mm sur cet exemple.

## Revendications

1. Dispositif d'injection d'un mélange d'air et de carburant dans une chambre de combustion d'une turbomachine, le dispositif d'injection ayant une symétrie de révolution autour d'un axe (33) et comportant, disposés d'amont en aval dans le sens d'écoulement des gaz, des vrilles radiales (42, 43) de diamètre extérieur D2, un bol (30) espacé axialement des vrilles radiales (42, 43), un anneau de support (50) du dispositif d'injection disposé autour du bol (30), le bol (30) comportant une paroi cylindrique (32) prolongée par une paroi évasée (31), la paroi évasée (31) étant munie de trous d'introduction d'air (34),
**caractérisé en ce que** l'anneau de support (50) comporte, disposées d'amont en aval dans le sens d'écoulement des gaz, une première partie cylindrique (51) de diamètre extérieur D3, reliée à une seconde partie cylindrique (52) de diamètre extérieur D4 espacée axialement de la première partie cylindrique (51), la première partie cylindrique (51) étant reliée à la paroi cylindrique (32) du bol (30) par une pluralité de pattes de support (55).

2. Dispositif d'injection selon la revendication 1, **caractérisé en ce que** le diamètre D3 est inférieur au diamètre D2.

3. Dispositif d'injection selon l'une des revendication 1 ou 2, **caractérisé en ce que** les pattes de support (55) sont réparties circonférentiellement et régulièrement autour du bol (30).

4. Dispositif d'injection selon l'une quelconque des revendications précédentes, **caractérisé en ce que** les trous d'introduction d'air consécutifs (34) sont reliés par une paroi résiduelle et **en ce que** les pattes de support (55) sont disposées en face de la paroi résiduelle.

5. Dispositif d'injection selon l'une quelconque des revendications précédentes, **caractérisé en ce que**, selon la direction circonférentielle, les pattes de support (55) ont une épaisseur (e) inférieure à l'épaisseur de la paroi résiduelle (m) existant entre deux trous d'introduction d'air (34) consécutifs.

6. Dispositif d'injection selon l'une quelconque des revendications précédentes, **caractérisé en ce que** le diamètre D3 est inférieur au diamètre D4.

7. Dispositif d'injection selon l'une quelconque des revendications précédentes, **caractérisé en ce que** la seconde partie cylindrique (52) de l'anneau de support (50) est munie d'une protubérance radiale annulaire (53) dirigée vers l'axe de la partie cylindrique.

8. Dispositif d'injection selon la revendication 7, **caractérisé en ce que** la protubérance radiale (53) est munie de trous de refroidissement (54).

9. Chambre de combustion comprenant une paroi interne, une paroi externe, un fond de chambre (8) **caractérisée en ce qu'**elle est munie d'au moins un dispositif d'injection selon l'une quelconque des revendications précédentes.

10. Turbomachine munie d'une chambre de combustion selon la revendication 9.

## Claims

1. An injection device for injecting an air-fuel mixture into a combustion chamber of a turbomachine, the injection device having rotational symmetry about an axis (33) and comprising, disposed from upstream to downstream in the flow direction of the gases, radial spinning means (42, 43) of external diameter D2, a bowl (30) with axial spacing from the radial spinning means (42, 43), a support ring (50) of the injection device disposed around the bowl (30), the bowl (30) comprising a cylindrical wall (32) extended by a flared wall (31), the flared wall (31) being provided with air inlet holes (34),
**characterised in that** the support ring (50) comprises, disposed from upstream to downstream in the flow direction of the gases, a first cylindrical part (51) of external diameter D3, connected to a second cylindrical part (52) of external diameter D4 with axial spacing from the first cylindrical part (51), the first cylindrical part (51) being connected to the cylindrical wall (32) of the bowl (30) by a plurality of support brackets (55).

2. The injection device according to claim 1, **characterised in that** the diameter D3 is less than the diameter D2.

3. The injection device according to either claim 1 or claim 2, **characterised in that** the support brackets (55) are distributed circumferentially and regularly around the bowl (30).

4. The injection deice according to any one of the preceding claims, **characterised in that** the consecutive air inlet holes (34) are connected by a residual wall and **in that** the support brackets (55) are arranged opposite the residual wall.

5. The injection device according to any one of the preceding claims, **characterised in that**, in the circumferential direction, the support brackets (55) have a thickness (e) less than the thickness of the residual wall (m) present between two consecutive air inlet holes (34).

6. The injection device according to any one of the preceding claims, **characterised in that** the diameter D3 is less than the diameter D4.

7. The injection device according to any one of the preceding claims, **characterised in that** the second cylindrical part (52) of the support ring (50) is provided with an annular radial protuberance (53) directed towards the axis of the cylindrical part.

8. The injection device according to claim 7, **characterised in that** the radial protuberance (53) is provided with cooling holes (54).

9. A combustion chamber comprising an internal wall, an external wall, a chamber bottom (8), **characterised in that** it is provided with at least one injection device according to any one of the preceding claims.

10. A turbomachine provided with a combustion chamber according to claim 9.

## Patentansprüche

1. Vorrichtung zum Einspritzen eines Luft-Kraftstoff-Gemischs in die Brennkammer einer Turbomaschine, wobei die Einspritzvorrichtung Rotationssymmetrie um eine Achse (33) hat und stromabwärts, d. h. in Strömungsrichtung der Gase angeordnet, radiale Drallgeber (42, 43) mit einem Außendurchmesser D2, eine Schale (30) mit axialem Abstand zu den Drallgebern (42, 43) und einen Trägerring (50) für die Einspritzvorrichtung umfasst, der um die Schale (30) herum angeordnet ist, wobei die Schale (30) aus einer zylindrischen Wand (32) mit einer trichterförmigen Erweiterung (31) besteht, die mit Luftzufuhrlöchern (34) versehen ist,
**dadurch gekennzeichnet, dass** der Trägerring (50) stromabwärts, d. h. in Strömungsrichtung der Gase angeordnet, einen ersten zylindrischen Teil (51) mit einem Außendurchmesser D3 umfasst, der mit einem zweiten zylindrischen Teil (52) mit einem Außendurchmesser D4 verbunden ist, und zwar mit axialem Abstand zum ersten zylindrischen Teil (51), wobei der erste zylindrische Teil (51) durch mehrere Halterungen (55) mit der zylindrischen Wand (32) der Schale (30) verbunden ist.

2. Einspritzvorrichtung nach Anspruch 1, **dadurch gekennzeichnet, dass** der Durchmesser D3 kleiner ist als der Durchmesser D2.

3. Einspritzvorrichtung nach einem der Ansprüche 1 oder 2, **dadurch gekennzeichnet, dass** die Halterungen (55) regelmäßig über den Umfang der Schale (30) verteilt sind.

4. Einspritzvorrichtung nach irgendeinem der vorstehenden Ansprüche, **dadurch gekennzeichnet, dass** die hintereinander liegenden Luftzufuhrlöcher (34) durch eine Restwandung verbunden sind und dass die Halterungen (55) gegenüber der Restwandung angeordnet sind.

5. Einspritzvorrichtung nach irgendeinem der vorstehenden Ansprüche, **dadurch gekennzeichnet, dass** die Halterungen (55) in Umfangsrichtung gesehen eine geringere Stärke (e) im Vergleich zur Stärke der Restwandung (m) aufweisen, die sich zwischen zwei hintereinander liegenden Luftzufuhrlöchern (34) befindet.

6. Einspritzvorrichtung nach irgendeinem der vorstehenden Ansprüche, **dadurch gekennzeichnet, dass** der Durchmesser D3 kleiner ist als der Durchmesser D4.

7. Einspritzvorrichtung nach irgendeinem der vorstehenden Ansprüche, **dadurch gekennzeichnet, dass** der zweite zylindrische Teil (52) des Trägerrings (50) mit einer radialen ringförmigen Ausstülpung (53) mit Ausrichtung zur Achse des zylindrischen Teils hin versehen ist.

8. Einspritzvorrichtung nach Anspruch 7, **dadurch gekennzeichnet, dass** die radiale Ausstülpung (53) mit Kühllöchern (54) versehen ist.

9. Brennkammer, die eine Innen- und eine Außenwand und einen Kammerboden (8) umfasst, **dadurch gekennzeichnet, dass** sie mit mindestens einer Einspritzvorrichtung nach irgendeinem der vorstehenden Ansprüche versehen ist.

10. Turbomaschine, die mit einer Brennkammer nach Anspruch 9 versehen ist.
